(19) Europäisches Patentamt
European Patent Office
Office européen des brevets

(11) Publication number: 0 013 461
B1

(12) # EUROPEAN PATENT SPECIFICATION

(45) Date of publication of patent specification: 06.04.83

(51) Int. Cl.³: C 08 G 18/42, C 08 G 18/10, C 08 G 18/60

(21) Application number: 79200816.1

(22) Date of filing: 28.12.79

(54) Process for the preparation of a segmented thermoplastic elastomer.

(30) Priority: 03.01.79 NL 7900022

(43) Date of publication of application:
23.07.80 Bulletin 80/15

(45) Publication of the grant of the patent:
06.04.83 Bulletin 83/14

(84) Designated Contracting States:
BE DE FR GB IT NL

(56) References cited:
DE - A - 2 651 762
FR - A - 1 445 841
US - A - 3 404 121
US - A - 4 102 868

(73) Proprietor: Akzo N.V.
Velperweg 76
NL-6824 BM Arnhem (NL)

(72) Inventor: Huntjens, Franciscus
Tooropstraat 4
6813 KT Arnhem (NL)

(74) Representative: Sieders, René et al,
P.O. Box 314
NL-6800 AH Arnhem (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 013 461 B1

Courier Press, Leamington Spa, England.

# Process for the preparation of a segmented thermoplastic elastomer

The invention relates to a process for the preparation of a segmented thermoplastic elastomer, by conversion in a melt system of

a. one or more —OH and/or —COOH groups-containing bifunctional polyesters or polyester amides having a melting point not higher than 100°C and a molecular weight in the range of 500 to 5000, and
b. one or more —OH and/or —COOH groups-containing bifunctional polyesters or polyester amides having a melting point not lower than 180°C and a molecular weight in the range of 500 to 5000 in the presence of such an amount of diisocyanate that the ratio between the number of —NCO groups and functional groups of both the low-melting and the high-melting compounds is at least 1,0 and at most 1,5.

A process of the type indicated above is described in United States Patent Specification 4 102 868.

According to the known process a powder of a dihydroxy polyester having a melting point not lower than 200°C and molecular weight in the range of 500 to 12000 is suspended in the prepolymer of a dihydroxy polyester having a melting point not higher than 100°C and a molecular weight in the range of 500 to 12000 and an organic diisocyanate, and the resulting suspension is heated to above the melting point of the powder until a linear polyurethane has formed. In a preferred embodiment the reaction mixture is passed in the shortest possible time—15 minutes or less—through a zone heated to 280°C. Although the known process leads to thermoplastic polyurethanes having elastomeric properties, it is not considered to be quite suitable for use on an industrial scale. In the first place the high-melting polyester prepared by transesterification should be cooled and formed into a powder. In the second place the residence time of the reaction mixture in the hot zone is so critical that a slight excess of the residence time and/or reaction temperature already leads to a greater or lesser degree of transesterification of the two polyester segments. This means both a decrease in the melting point and an increase in the glass transition temperature of the resulting block copolymer.

The invention consists in that a process of the type indicated above as known the transesterification catalyst present in one segment or in both is deactivated prior to the conversion process.

As transesterification catalyst in the preparation of polyester generally a calcium salt, a manganese salt and/or zinc salt is used. These salts may be deactivated by adding precipitating or complexing agents. Deactivation can also be effected by a thermal treatment. Thus, it has been found that when as catalyst zinc acetate is used, it is deactivated upon heating the reaction mixture to a temperature higher than 200°C. Particularly, it has been found that favourable results are obtained when use is made of complexing phosphorus compounds which are also suitable to be used as stabilizers in polyesters. In this connection mention is made of the phosphites and thiophosphites described in United States Present Specification 3 039 993, the phosphates, phosphonates, phosphonic acids and phosphinic acids which correspond to the respective structural formulae:

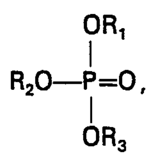
phosphate

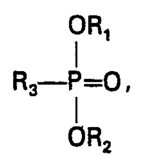
phosphonate

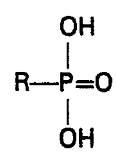
phosphonic acic

and

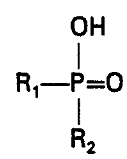
phosphinic acid

where R, $R_1$, $R_2$ and $R_3$ may be the same or different and represent a hydrogen atom or a substituted or unsubstituted organic group. As examples of suitable substituents may be mentioned a lower alkyl group, alkoxy group, cycloalkyl group, cycloalkoxy group, hydroxyl group and/or a halogen atom. If R, $R_1$, $R_2$ or $R_3$ represent an organic group, they generally contain not more than 30, and preferably not more than 18 carbon atoms. As examples may be mentioned alkyl, cycloalkyl, carboalkoxyalky, aryl, aralkyl and aroxyalkyl.

As examples of very suitable phosphorus compounds may be mentioned triphenyl phosphate, triphenyl phosphite, triethyl phosphite, tricyclohexyl phosphite, tri-2-ethylhexyl trithiophosphite, trieicosyl phosphite, tri-o-chlorophenyl phosphite, 2-carbomethoxyethyl dimethyl phosphonate, hydroxymethyl phosphonic acid, diphenyl phosphinic acid, carboxymethyl phosphonic acid, carbethoxymethyl phosphonic acid, carboxyethyl phosphonic acid, tris(triethylene glycol) phosphate and more particularly carbethoxymethyl diethyl phosphonate and tri-p-tert.butylphenyl phosphite.

A particularly advantageous and rapid-acting group of phosphorus compounds corresponds to the formula:

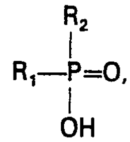

where $R_1$ and $R_2$ may be the same or different and represent a hydrogen atom or an alkyl, cycloalkyl, aralkyl or aryl group each having not more than 20 carbon atoms, or the group $OR_3$, where $R_3$ represents a metal ion or an ammonium ion or the same group or the same atom as $R_1$, irrespective of the meaning of $R_1$.

Generally it is desirable that the amount of phosphorus compound used for the deactivation should correspond to at least 0,5 phosphorus atoms per metal atom of the transesterification catalyst to be deactivated.

The most favourable results are generally obtained if the phosphorus compound used for the deactivation is employed in an amount of 3 to 15 phosphorus atoms per metal atom.

As examples of suitable phosphorus compounds may be mentioned inorganic acids such as orthophosphoric acid, phosphorous acid or hypophosphorous acid; phosphinic acids such as methylphosphinic acid, ethylphosphinic acid, isobutylphosphinic acid, benzylphosphinic acid, phenylphosphinic acid, cyclohexylphosphinic acid or 4-methylphenylphosphinic acid; phosphonic acids such as methylphosphonic acid, ethylphosphonic acid, isopropylphosphonic acid, isobutylphosphonic acid, benzylphosphonic acid, phenylphosphonic acid, cyclohexylphosphonic acid or 4-methylphenylphosphonic acid, the partial esters of said acids, particularly including the $C_{1-20}$ alkyl, cycloalkyl, aryl or aralkyl esters, such as for instance, the methyl, ethyl, propyl, cyclohexyl, phenyl or benzyl esters; the partial metal salts of these acids, and more particularly the metals of groups I and II of the periodic system, such as sodium, potassium, calcium or magnesium; and the partial ammonium salts of these acids.

When use is made of a salt of calcium, manganese and/or zinc as transesterification catalyst, it should be taken care that no antimony oxide is employed as polycondensation catalyst. In that case it is no longer or hardly found possible to obtain a deactivated prepolymer.

According to the invention it is preferred that use should be made of polyesters or polyester amides whose preparation was carried out in the presence of a catalytic amount of a titanium catalyst. The advantage of a titanium catalyst is not only its high reactivity, but especially the ease with which this catalyst can be deactivated.

As examples of suitable titanium catalyst may be mentioned esters of titanic acid and the neutralized products thereof, hydrogenated hexaalkoxy titanates of magnesium, titanyl oxalates, titanium halides, hydrolysed products of titanium halides, titanium hydroxide and titanium oxide hydrate. Preference is given to alkyl titanates such as tetramethyl titanate, tetraethyl titanate, tetrapropyl titanate or tetrabutyl titanate, the neutralized products thereof, the hydrogenated magnesium hexaalkoxy titanates, such as hydrogenated magnesium hexabutoxy titanate Mg $(HTi(OC_4H_9)_6)_2$, titanyl oxalate, calcium titanyl oxalate, titanium tetrachloride, the reaction product of titanium tetrachloride and hexane diol and the reaction product of titanium tetrachloride and water. Said titanium catalysts are used alone or in combination with magnesium acetate or calcium acetate. Inorganic titanates, such as lanthanum titanate, calcium acetate/antimonytrioxide mixtures and lithium alkoxides and magnesium alkoxides are examples of other suitable catalysts. They are to be used in an amount which is generally in the range of 0,005 to 0,3% by weight, calculated on the components participating in the reaction. For a man skilled in the art it will not be difficult to establish the amount of catalyst to be used for a given system.

Many of the low-melting polyesters or polyester amides suitable to be used in carrying out the process according to the invention are commercially available. It has been found that they generally contain no or hardly any transesterification promoting catalysts. Therefore, there is generally no need for deactivation of these low-melting components. The high-melting components, however, are generally prepared in the presence of a transesterification-promoting catalyst. If the deactivating compound is a phosphorus compound, satisfactory results are generally obtained if the phosphorus compound is introduced into the high-melting polyester or the high-melting polyester amide prior to the conversion process and the mixture is kept in the molten state for at least 5 minutes. It has been found that favourable results are always obtained if the high-melting polyester or the high-melting polyester amide with the phosphorus compound introduced into it are in the molten phase for a period in the range of 30 to 60 minutes.

In carrying out the process according to the invention the general procedure is such that first a prepolymer is prepared by reacting the low-melting polyester or the low-melting polyester amide with the calculated amount of diisocyanate in a manner known in itself, and the resulting prepolymer is reacted with the high-melting polyester or polyester amide which is in the molten phase.

The prepolymer is preferably so prepared that per 1,0 mole of bifunctional compound about 1,1 to 3,5 moles of diisocyanate are introduced into the reaction mixture.

The reaction in the melt of the compound—which is dehydated for instance by heating it for

about one hour at 100° to 150° in vacuo at about 500 to 6666 Pa (6 to 50 mm Hg)—with the diisocyanates is carried out in a manner known in itself at about 80°—120°C, and preferably 90°—110°C, or in the presence of an inert solvent. As examples of suitable solvents may be mentioned: methylene chloride, carbon tetrachloride, benzene, chlorobenzene, methylethyl ketone, tetrahydrofuran, dioxane, glycol monomethyl ether acetate, glycol formal, dichlorobenzene, trichlorobenzene, nitrobenzene, benzoic methyl ester, acetophenone. When the conversion takes place in solvents, particularly low-boiling ones, such as methylene chloride, they may either be distilled off as the reaction proceeds, or the NCO-prepolymer may remain dissolved in the solvent, for instance in dioxane, solutions of the NCO-prepolymers generally being better processable, because of their low viscosity, than the melts. At elevated temperature (80°—100°C) also the solvent-free melts of the NCO-prepolymer have such viscosities as lead to rapid dissolving or intermixing upon further conversion.

The resulting prepolymer of a temperature of about 90°—110°C is subsequently added, with vigorous stirring, to the molten high-melting polyester or polyester amide and for some time kept at elevated temperature.

When use is made of diisocyanate having a relatively high vapour pressure, such as diphenylmethane-4,4'-diisocyanate (MDI) the procedure also may be such that the first the high-melting polyester or polyester amide is deactivated, and subsequently an excess of MDI is added to the melt, with vigorous stirring, after which the calculated amount of the low-melting polyester or polyester amide is added. This method has the advantage that the preparation can take place in one and the same reactor.

The composition of the thermoplastic elastomers prepared by the process according to the invention may be varied between very wide limits. Favourable results may be obtained if the reaction mixture is formed by 10 to 90 parts by weight of high-melting polyester or polyester amide b and 90 to 10 parts by weight of low-melting polyester or polyester amide a per 100 parts by weight of a+b.

Preference is given to elastomers obtained by a process in which the reaction mixture consists of 40 to 80 parts by weight of polyester or polyester amide b, 60 to 10 parts by weight of polyester or polyester amide a and about 2 to about 15 parts by weight of a diisocyanate c per 100 parts by weight of a+b+c.

Elastomers having optimum properties are generally obtained by using a process in which the high-melting component has a melting point of at least 210°C and the low-melting component has a melting point not higher than 60°C, and the temperature at which the prepolymer is converted with the high-melting component is between at least 10°C above the melting point of the high-melting component and 290°C. The high-melting polyesters are obtained by esterification of dicarboxylic acids with dialcohols or by transesterification of alkyl esters or hydroxy alkyl esters of dicarboxylic acids with dialcohols. The melting point of these polyesters is generally in the range of 180° to 260°C, and particularly in the range of 200° to 240°C.

As examples of aromatic acids which are suitable to be used as such or in the form of derivatives for the preparation of polyesters or polyester amides having a melting point above 180°C may be mentioned: terephthalic acid, isophthalic acid, diphenyl-4,4'-dicarboxylic acid, diphenylsulphon-4,4'-dicarboxylic acid, diphenyl ether-4,4'-dicarboxylic acid, benzophenone-4,4'-dicarboxylic acid, naphthalene-2,6- and -2,7-dicarboxylic acid, ethane-diphenyl ether-4,4'-dicarboxylic acid.

As examples of dialcohols that are suitable to be used for esterification may be mentioned: ethylene glycol, 1,3-propane diol, 1,4-butane diol, 1,6-hexane diol, 2,2-dimethyl-1,3-propane diol, diglycol, xylylene glycol-1,3 or 1,4 and 1,4-bisoxymethyl cyclohexane.

Optionally, the high-melting component may contain 50 mole per cent of non-aromatic constituents. As examples of suitable non-aromatic acids may be mentioned: succinic acid, adipic acid, ether dipropionic acid, 1,4-cyclohexane dicarboxylic acid, 4-carboxyphenyl propionic acid and 1,4-phenylene ether diacetic acid. The non-aromatic constituent itself may be a compound capable of reacting with a prepolymer formed from the low-melting component and diisocyanate. It will then always be present beside one or more of said aromatic polyesters or polyester amides. As examples may be mentioned polyhydroxy compounds as well as dihydroxy amides, ureas or hydrazo dicarboxylic acid amides having a melting point not lower than 160°C, such as diphenylmethane-4,4'-di-(β-hydroxy ethy) urea; diphenylmethane-4,4'-di-(4-hydroxy cyclohexyl) urea; oxalic acid- di(β-hydroxy ethyl)-amide; 1,4-cyclohexane-di-(γ-hydroxy butyric acid)-amide; terephthalic acid-di-(γ-hydroxy propyl)-amide and hydrazo dicarboxylic acid (γ-hydroxy propyl)-amide.

Preference, however, is given to the use of high-melting (co)polyesters or (co)polyester amides which are built up of units derived from one or more dicarboxylic acids having a molecular weight not higher than 300, at least 70 mole % of which consists of terephthalic acid, and of units derived from one or more low-molecular weight diols having a molecular weight not higher than 250, at least 70 mole % of which consists of 1,4-butane diol, and the sum of the percentages of the dicarboxylic acid which is not terephthalic acid and of the diol which is not 1,4-butane diol is not higher than 30. The group of diols having a molecular weight not higher than 250 which may be used besides 1,4-butane diol for the preparation of the above-mentioned copolyesters or copolyester amides includes aliphatic, cycloaliphatic and aromatic dihydroxy compounds.

Preference is given to the use of diols having 2—15, and more particularly 5—10 carbon atoms, such as ethylene glycol, propylene glycol, isobutylene glycol, pentamethylene glycol, 2,2-dimethyltrimethylene glycol, hexamethylene glycol and decamethylene glycol, dihydroxy cyclohexane, dimethanol cyclohexane, resorcinol, hydroquinone and 1,5-dihydroxy naphthalene.

Special preference is given to the use of aliphatic diols having 2—8 carbon atoms. The group of bisphenols that may be used includes bis(p-hydroxy)biphenyl, bis(p-hydroxy phenyl)methane and bis(p-hydroxy phenyl)propane.

The group of dicarboxylic acids having a molecular weight not higher than 300 which may be used besides terephthalic acid for the preparation of the above-mentioned high-melting bifunctional copolyesters or copolyester amides includes aliphatic, cycloaliphatic or aromatic dicarboxylic acids.

By the term aliphatic dicarboxylic acids used in the description of the present invention is to be understood carboxylic acids having two carboxyl groups which are each linked to a saturated carbon atom.

If the carbon atom to which the carboxyl group is linked is saturated and forms part of a ring, the acid is a cycloaliphatic acid. Aliphatic and cycloaliphatic acids containing a conjugated unsaturation often cannot be used because of their tendency to homopolymerization. Particular unsaturated acids, however, such as maleic acids, are quite suitable to be used.

The aromatic dicarboxylic acids according to the invention are dicarboxylic acids having two carboxyl groups which are linked to a carbon atom in a separate or a condensated benzene ring. It is not necessary for the two functional carboxyl groups to be linked to the same aromatic ring; if more than one ring is present, the rings may be interlinked through aliphatic or aromatic divalent groups, or divalent groups such as —O— or —$SO_2$—.

As representative examples of aliphatic and cycloaliphatic acids that may be used in the process according to the invention may be mentioned sebacic acid, cyclohexane 1,3-dicarboxylic acid cyclohexane 1,4-dicarboxylic acid, adipic acid, glutaric acid, succinic acid, carbonic acid, oxalic acid, azelaic acid, diethyl malonic acid, allyl malonic acid, 4-cyclohexane 1,2-dicarboxylic acid, $\alpha$-ethyl suberic acid, $\alpha.\alpha'.\beta.\beta'$.tetramethyl succinic acid, cyclopentane dicarboxylic acid, decahydronaphthalene 1,5-dicarboxylic acid, bicyclohexyl 4,4'-dicarboxylic acid, decahydronaphthalene 2,6-dicarboxylic acid, 4,4'-methylene-bis(cyclohexyl carbonic acid), furan 3,4-dicarboxylic acid and cyclobutane 1,1-dicarboxylic acid, Preferable aliphatic and cycloaliphatic acids are cyclohexane dicarboxylic acids and adipic acid. As representative examples of aromatic dicarboxylic acids may be mentioned phthalic acid and isophthalic acid, bibenzoic acid, substituted dicarboxy compounds having two benzene rings, such as bis-(p-carboxyphenyl)methane, p-oxy(p-carboxyphenyl)benzoic acid, ethylene-bis(p-oxybenzoic acid), naphthalene 1,5-dicarboxylic acid, naphthalene 2,6-dicarboxylic acid, naphthalene 2,7-dicarboxylic acid, phenanthrene dicarboxylic acid, anthracene dicarboxylic acid, 4,4'-sulphenyldibenzoic acid and $C_1$—$C_{12}$ alkyl and ring substitution derivatives thereof, such as halogen derivatives, alkoxy derivatives and/or aryl derivatives. Hydroxyl acids, such as p-($\beta$-hydroxyethoxy)benzoic acid also may be used, provided that also an aromatic dicarboxylic acid is present.

Aromatic dicarboxylic acids form a group which is preferred to be used in the preparation of the last-mentioned bifunctional high-melting copolyesters or copolyester amides.

Preferred aromatic acids are the acids having 8—16 carbon atoms, more particularly the phenylene dicarboxylic acids, i.e., phthalic acid and isophthalic acid.

To obtain a satisfactory hardening rate it is essential that at least 70 mole % of the dicarboxylic acid incorporated into the high-melting copolyester or copolyester amides should consist of terephthalic acid, and at least about 70 mole % of the low molecular weight diol incorporated into the high-melting part of the polymer consist of 1,4-butane diol.

A further requirement to be satisfied by the preferred composition of the high-melting copolyesters or copolyester amides is that the sum of the percentages of the dicarboxylic acid which is not terephthalic acid and the other low molecular weight diol is not higher than 30. Should, for instance, 30% of the low molecular weight diol molecules used be substances other than 1,4-butane diol, then all the dicarboxylic acid used must be terephthalic acid, or should, say, 10% of the low molecular weight diol molecules used be substances other than 1,4-butane diol, then at least about 80% of the dicarboxylic acid used must be terephthalic acid.

Copolyesters having fewer 1,4-butylene terephthalate units than is assured by the above conditions do not have sufficiently rapid hardening rates.

Within the scope of the present invention it is preferred that use be made of high-melting polyesters or polyester amides which are entirely or practically entirely built up of units derived from terephthalic acid and 1,4-butane diol.

The resulting polyesters or polyester amides generally have an accurately predetermined molecular weight between 500 and 5000, and preferably between 1200 and 3000. The low-melting polyesters or polyester amides can be obtained in a manner known in itself and similar to that used for the preparation of high-melting polyesters or polyester amides, for instance by polycondensation of polyfunctional, and preferably bifunctional alcohols, amino alcohols, hydroxy carboxylic acids, lactones, aminocarboxylic acids, cyclic carbonates or polycarboxylic acids.

Any desirable molecular weight and number and type of terminal groups may be obtained by an appropriate choice of the mixing ratio of the above-mentioned components. A decrease in melting point of the low-melting components can be obtained by reacting them with a less than stoichiometric amount of diisocyanate. Thus polyesters and diisocyanates, for instance toluene diisocyanate, used in a molar ratio of 2:1 to 3:2, can be converted into polyester urethanes having terminal hydroxyl groups.

As examples may be mentioned polyesters from adipic acid and ethylene glycol, butane diol, pentane diol, hexane diol, mixtures of ethylene glycol and propylene glycol, hexane diol and methylhexane diol, hexane diol and 2,2-dimethyl-1,3-propane diol, hexane diol, butane diol or pentane diol or polyester amides from hexane diol and piperazine. Also other glycols, such as 1,3- or 1,4-cyclohexane diol or 1,3- or 1,4-bishydroxy methylcyclohexane, amino alcohols such as amino ethanol or amino propanol may be incorporated into the low-melting components. The low-melting components may entirely or partly be composed of lactones, such as substituted or unsubstituted caprolactone or butyrolactone.

Under some circumstances, for instance for the purpose of increasing the melt viscosity of the end product, it may be advisable to incorporate a small proportion of compounds of a higher functionality.

As examples of such compounds may be mentioned trimethylol ethane, trimethylol propane or hexane triol. The low-melting bifunctional components also may be derived from, for instance, the following acids: glutaric acid, pimelic acid, suberic acid, isosebacic acid or ricinoleic acid. Into the low-melting bifunctional compounds there also may be incorporated aliphatic dicarboxylic acids having heteroatoms, such as thiodipropionic acid.

Further suitable acids are cycloaliphatic dicarboxylic acids, such as 1,3- or 1,4-cyclohexane dicarboxylic acid and terephthalic acid and isophthalic acid.

To obtain a remarkably better resistance to hydrolysis it is preferred that use is made of polyesters made up of units each consisting of at least 5 carbon atoms. As examples thereof may be mentioned: adipic acid and 2,2-dimethyl propane diol or mixtures of 1,6-hexane diol and 2,2-dimethyl propane diol or 2-methyl-1,6-hexane diol.

Besides the low-melting polyesters or polyester amides the segmented thermoplastic elastomers according to the invention may contain a limited proportion of other low-melting bifunctional compounds.

Examples thereof include polyalkylene glycol ethers having terminal hydroxyl groups as obtained by reaction with water, diamines, di- or trifunctional alcohols or amino alcohols. Special mention is made here of polytetrahydrofuran, which is obtained by polymerization of tetrahydrofuran in the presence of acid catalysts or copolymers thereof and small amounts of ethylene oxide and/or propylene oxide.

Preference is given to the exclusive use of polyesters and/or polyester amides, because only then the essential advantages of the present invention, such as a very good resistance to UV-light, become manifest. The use of a small proportion of, for instance, polyethylene oxide glycol may be of importance for improving the physical properties, such as swelling in oil.

The molecular weight of the low-melting bifunctional compounds is preferably in the range of about 700—3500. This molecular weight can be very much increased by the use of a less than stoichiometric amount of diisocyanate, so that also from a compound having a molecular weight in the range of 500 to 1000 an excellent elastomer can be obtained.

It has been found that an elastomer having very good properties can be obtained if the low-melting polyester has a molecular weight in the range of 800 to 2500, preference being given to the use of polybutylene adipate as low-melting polyester.

It has been found that under some circumstances the resistance to hydrolysis of the elastomers prepared by the present process is not quite satisfactory. According to the invention the solution to this problem consists in that preferably into the ready product there is incorporated a stabilizing amount of polycarbodiimide. The amount of it to be incorporated is entirely in accordance with the description of the stabilization of polyethylene terephthalate in the Netherlands Patent Application 6 907 958.

Another useful solution to improving the resistance to hydrolysis is the introduction of high molecular weight silicon compounds having —OH, —$NH_2$ and/or —COOH terminal groups in an amount of 0,5 to 5 per cent by weight, calculated on the elastomer. The diisocyanates, with the aid of which the high-melting and the low-melting segments of the thermoplastic elastomers according to the invention are interlinked may be represented by the general formula OCNRNCO, wherein R represents a divalent aliphatic, cycloaliphatic or aromatic group. As examples of suitable diisocyanates of the aliphatic type may be mentioned:

hexamethylene diisocyanate;
dimethyl hexamethylene diisocyanate;
trimethyl hexamethylene diisocyanate;
metaxylylene diisocyanate;
paraxylylene diisocyanate;
tetramethylene diisocyanate.

In the case where R represents an aromatic group it may be substituted for instance with a halogen, a lower alkyl or a lower alkoxy group.

As examples of these diisocyanates may be mentioned:
1-chloro-2,4-phenylene diisocyanate;
2,4-toluene diisocyanate;
a mixture of 2,4-toluene and 2,6-toluene diisocyanate;
tetramethylphenylene diisocyanate;
diphenylmethane-4,4'-diisocyanate;
metaphenylene diisocyanate;
paraphenylene diisocyanate;
1,5-naphthalane diisocyanate;
biphenyl-4,4'-diisocyanate;
diphenylmethane-4,4'-diisocyanate;
4,4'-isopropylidene diphenylisocyanate;
benzophenon-4,4'-diisocyanate;
diphenylether- and diphenylsulphide diisocyanate;
3,3'-dimethyldiphenyl-4,4'-diisocyanate;
3,3'-dimethoxydiphenyl-4,4'-diisocyanate;
3,3'-dichlorodiphenyl-4,4'-diisocyanate;
benzofuran-2,7-diisocyanate.

Examples of diisocyanates having a cycloaliphatic group include isophoron diisocyanate, dicyclohexylmethane diisocyanate and 1,4-cyclohexane diisocyanate.

It has been found that in general optimum properties are obtained if the ratio between the number of —NCO groups of the diisocyanate and the functional groups of both the low- and the high-melting polyesters and/or polyester amides is in the range of 1,1 to 1,3.

Within the scope of the invention it is further preferred that use should be made of polyesters having hydroxyl end groups, both with a view to the properties of the end product and the ease of preparation.

The thermoplastic elastomers obtained by the process of the present invention are excellently suitable to be injection moulded or extruded. Over the known commercial elastomers they have the great advantage of an exceptionally high resistance to oxidative degradation and UV-radiation.

The invention will be further described in the following examples, which are of course only meant to illustrate the invention and do not limit the scope thereof.

To determine the properties of the polymers prepared in these examples use was made of the following methods.

$\eta_{rel}$=relative viscosity measured on a solution of 1 gramme of elastomer in 100 ml of m-cresol at 25° using an Ubbelohde viscosimeter.

A Du Pont Thermal Analyzer was used to determine:
Tg=the temperature range within which the glass transition of the soft segment takes place;
Ts=the temperature range within which the hard segment melts;
$Ts_{(p)}$=the temperature(s) at the melting peak(s).

The hardness (Shore D) was measured in accordance with DIN 53 505.

The stress-strain curves were measured on ISO II bars (punched) in conformity with DIN 53 504.

On these the following quantities were measured:

— $S_{100}$=the stress value in $N/m^2$ at 100% elongation
— BS=the breaking load in $N/m^2$
— BR=the breaking elongation (in %).

The tension set was determined after extension by 100% in accordance with DIN 53 518.

The compression set B (25% deformation) was determined in accordance with DIN 53 517.

The tear resistance (Graves) was measured in accordance with ASTM D-1004 Die C.

Example I

A mixture consisting of:

0,37 moles of polybutylene adipate (molecular weight 1070)
1,44 moles of polybutylene adipate (mol. weight 1750) and
4,00 moles of toluene diisocyante

was heated for 45 minutes at 85°C.

Besides, polybutylene terephthalate having a molecular weight of 2070 was prepared by transesterification of dimethyl terephthalate in the presence of an excess of 1,4-butane diol and 425 ppm of tetrabutyl titanate as catalyst.

Part of the polybutylene terephthalate was heated for 30 minutes at 245°C in the presence of

1500 ppm of diethylcarbethoxy methyl phosphate. Half of the prepolymer of polybutylene adipate and toluene diisocyanate was added, with vigorous stirring, to 0,91 moles of deactivated and an equal amount to non-deactivated polybutylene terephthalate. In either case the polybutylene was in the molten phase at 245°C.

Samples were taken after reaction times of 5, 20, 30, 60 and 90 minutes, respectively, and—after immediate cooling—the Tg, Ts and $Ts_{(p)}$ were measured.

The results are given in the following table.

TABLE I

| reaction time at 245°C (minutes) | Tg (°C) | Ts (°C) | $Ts_{(p)}$ (°C) |
|---|---|---|---|
| non-deactivated catalyst | | | |
| 5 | −43/−15 | 135/232 | 203 |
| 20 | −15/+ 5 | 93/172 | 143 |
| 30 | −10/+12 | 70/152 | 125 |
| 60 | −12/+ 5 | 88/152 | 125 |
| 90 | −15/+ 7 | 77/152 | 125 |
| deactivated catalyst (according to invention) | | | |
| 5 | −45/−15 | 200/232 | 215 |
| 20 | −47/−17 | 185/230 | 214 |
| 30 | −45/−22 | 185/230 | 214 |
| 60 | −45/−13 | 185/230 | 214 |
| 90 | −45/−22 | 180/230 | 212 |

The above table clearly shows that where use is made of a non-deactivated polybutylene terephthalate transesterification takes place after as short a period as 5 minutes, and already after 20 minutes residence time an elastomer is obtained having inferior properties, particularly as far as glass transition temperature is concerned.

Example II

Four polymers were prepared in accordance with the procedure used in Example I. The polymerization was carried out in a 10 l-autoclave.

In all four cases the residence time was about 30 minutes at 245°C.

The polybutylene terephthalate used was heated for 30 minutes in the presence of 800 ppm diethyl carbethoxymethyl phosphonate. The content of toluene diisocyanate+polybutylene terephthalate in the elastomer was always 60% by weight.

The results are listed in the following table.

TABLE II

| | NCO/OH-ratio | | | |
|---|---|---|---|---|
| | 1,0 | 1,1 | 1,2 | 1,3 |
| Prepolymer composition: | | | | |
| — toluene diisocyanate (moles) | 2 | 2 | 2 | 2 |
| — polybutylene adipate having a molecular weight of 1936 (moles) | 1 | 0,71 | 0,59 | 0,15 |
| — polybutylene adipate having a molecular weight of 1046 (moles) | 0 | 0,29 | 0,44 | 0,85 |
| relative viscosity $\eta$rel | 1,92 | 1,94 | — | 1,71 |
| Tg (°C) | −22/−50 | −20/−40 | −18/−40 | −15/−40 |
| Ts (°C) | 160/225 | 160/223 | 160/227 | 160/224 |
| $Ts_{(p)}$ (°C) | 213 | 202,209 | 206,214 | 202,212 |
| Hardness (Shore D) | 48 | 55 | 58 | 56 |
| $S_{100}$ ($MN/m^2$) | 11 | 12 | 12 | 13 |
| BS ($MN/m^2$) | 24 | 54 | 55 | 64 |
| BR (%) | 700 | 630 | 600 | 550 |
| Tension set(%) | 56 | 33 | 26 | 22 |
| Compression set (%) | 40 | 28 | 27 | 26 |
| Tear resistance (kN/m) | 133 | 151 | 161 | 160 |

The above table clearly shows that the most favourable results are obtained using a small excess of —NCO groups.

Example III

In this example it is shown that the hardness of the elastomers prepared by the present process, which hardness—as is generally the case with block polymers—is very much dependent on the weight percentage of hard segments, may be influenced by a great many parameters.

First of all, mention is made here of the molecular weight of the hard segments. An increase in the molecular weight thereof, with the other parameters being kept constant, is accompanied by an increase in the hardness of the elastomer.

With a constant molecular weight of the hard segments an increase in the molecular weight of the soft segments will result in a decrease of the hardness of the elastomer. With a constant molecular weight of both the hard and the soft segments the hardness of the elastomer may be affected by a change in the NCO/OH-ratio of the prepolymer.

A decrease of the NCO/OH-ratio of the prepolymer corresponds to an increase in the proportion of soft segments and, consequently, leads to a decrease of the hardness of the elastomer.

The compositions of a few elastomers prepared in a manner described in previous examples and their physical properties are given in the following table. The hard segment was deactivated dihydroxy polybutylene terephthalate having a molecular weight of 2400. The polymerization of the elastomer was conducted in an 0,5 l-autoclave for 30 minutes at 245°C, followed by 30 minutes deactivation with diethylcarbethoxymethyl phosphonate at 245°C.

The diisocyanate used was toluene diisocyanate at an NCO/OH ratio of 1,10 for the end product.

TABLE III

| | 1 | 2 | 3 | 4 | 5 | 6 |
|---|---|---|---|---|---|---|
| Prepolymer composition | | | | | | |
| toluene diisocyanate (moles) | 1,75 | 1,75 | 1,75 | 1,50 | 1,50 | 1,50 |
| polybutylene adipate having a molecular weight of 1046 (moles) | 0,16 | 0,59 | 0,88 | 0,26 | — | 0,90 |
| a molecular weight of 1016 (moles) | — | — | — | — | 0,59 | — |
| a molecular weight of 1936 (moles) | 0,84 | 0,41 | 0,12 | 0,74 | 0,41 | 0,10 |
| ratio of number of NCO/OH groups in the prepolymer | 1,75 | 1,75 | 1,75 | 1,50 | 1,50 | 1,50 |
| relative viscosity $\eta$ rel | 2,09 | 2,08 | 2,04 | 2,07 | 2,18 | 1,97 |
| Hardness (Shore D) | 40 | 45 | 48 | 34 | 39 | 43 |
| $S_{100}$ ($MN/m^2$) | 8 | 10 | 12 | 7 | 8 | 8 |
| BS ($MN/m^2$) | 31 | 45 | 30 | 31 | 38 | 40 |
| BR (%) | 730 | 670 | 630 | 700 | 710 | 700 |
| compression set (%) | 49 | 34 | 29 | 56 | 35 | 34 |
| tear resistance (kN/m) | 124 | 142 | 144 | 93 | — | 116 |

Example IV

In this example it is demonstrated that the functionality of the prepolymer can still be made to exceed the value of 2,00 by incorporation into the soft segment of a trifunctional compound, viz. trimethylol propane (TMP).

Incorporation per molecule of soft segment of p molecules of the trifunctional TMP will result in a functionality

$$F=\frac{1\times 2+p\times 3}{1+p}.$$

For example, incorporation of 0,25 moles of TMP per mole of butylene adipate (PBA) will result in a functionality

$$F=\frac{1+2+0,25\times 3}{1,25}=2,20.$$

The compositions of a few elastomers prepared in a manner described in the Examples I and II and their physical properties are given in the following table.

The NCO/OH-ratio in the end product was always 1,1.

The melt viscosity was measured with a Göttfert viscosimeter with a capillary 3,8 cm long and 0,1 cm in diameter. The shear rate was chosen in accordance with extrusion conditions used in actual practice, viz. at D=500 sec.$^{-1}$. The quantity is then defined as follows:

$$D=\frac{4V}{\pi r^3}\ (\text{sec.}^{-1}),$$

where V=the volume in $cm^3$ per second which flows through the capillary;

r=radius of the capillary (cm).

The measurements with the Göttfert Rheometer were carried out at a temperature in the range of 205° to 230°C.

Besides the melt viscosity the melt index was measured at a temperature of 220°C and a force of 21,5 N. The amount in polymer in grammes which flows through the capillary of the viscosimeter in 10 minutes was taken as a measure of the melt index, the value of the melt index increasing with decreasing melt viscosity.

The resultes are listed in Table IV.

The hard segments were prepared from two batches of polybutylene terephthalate having a molecular weight of 2400 and 2640, respectively.

TABLE IV

| | 1 | 2 | 3 | 4 | 5 |
|---|---|---|---|---|---|
| Composition: | | | | | |
| toluene diisocyanate (TDI) (moles) | 2,0 | 2,0 | 2,0 | 2,0 | 2,0 |
| polybutylene adipate having a molecular | | | | | |
| weight of 1046 (moles) | 0,289 | 0,267 | 0,247 | 0,228 | 0,210 |
| weight of 1936 (moles) | 0,711 | 0,658 | 0,610 | 0,562 | 0,517 |
| polybutylene terephthalate (PBTP) having a mol. weight of | | | | | |
| 2400 (moles) | 0,818 | 0,817 | 0,818 | 0,818 | — |
| 2640 (moles) | — | — | — | — | 0,818 |
| functionality of prepolymer (F) | 2,00 | 2,05 | 2,10 | 2,15 | 2,20 |
| trimethylol propane TMP (moles) | 0,000 | 0,049 | 0,095 | 0,140 | 0,182 |
| TDI+PBTP (wt %) | 58,1 | 60,0 | 61,6 | 63,4 | 66,9 |
| Melt viscosity: | | | | | |
| Melt index at 220°C (g/10 min) | 40 | 21 | 14 | 1 | 0 |
| Melt viscosity Göttfert at D=500 $sec.^{-1}$ (Pa.s) | | | | | |
| at 205°C | $3{,}9.10^2$ | $4{,}2.10^2$ | $10{,}—.10^2$ | $9{,}0.10^2$ | — |
| at 210°C | $1{,}5.10^2$ | $1{,}7.10^2$ | $3{,}5.10^2$ | $3{,}2.10^2$ | $22{,}0.10^2$ |
| at 215°C | $0{,}42.10^2$ | $0{,}49.10^2$ | $1{,}6.10^2$ | $1{,}3.10^2$ | $10{,}0.10^2$ |
| at 220°C | $0{,}21.10^2$ | $0{,}25.10^2$ | $0{,}60.10^2$ | $0{,}44.10^2$ | $4{,}0.10^2$ |
| at 225°C | — | — | — | — | $1{,}7.10^2$ |
| at 230°C | — | — | — | — | $0{,}9.10^2$ |

The above table clearly shows an increase in melt viscosity with increasing proportion of TMP.

An increase in functionality from 2,15 to 2,20 appears to be attended with a particularly strong increase in melt viscosity. The melt viscosity is also dependent on the NCO/OH-ratio of the final elastomer and the diisocyanate used. Thus, a polymer prepared from a mixture containing diphenyl methane-4,4'-diisocyanate (MDI) will generally have a higher melt viscosity than a polymer prepared under the same conditions but from a mixture containing TDI.

Example V

In this example a number of elastomers are compared which in spite of their difference in composition show a great resemblance as far as a number of their physical properties are concerned. In all cases the polybutylene terephthalate used had a molecular weight of 2400 and was deactivated by heating at 245°C in the presence of such an amount of diethyl carbethoxymethyl phosphonate that the ratio P/Ti was 12.

The further preparation of the polymers was entirely in accordance with the procedure indicated in the Examples I and II, except that into the soft segment of polymer 3 some amount of TMP was still incorporated. The compositions and the measuring results are summarized in Table V.

TABLE V

| | 1 | 2 | 3 | 4 |
|---|---|---|---|---|
| Composition: | | | | |
| toluene diisocyanate (TDI) (moles) | 2,0 | 2,0 | 2,75 | — |
| MDI (moles) | — | — | — | 1,9 |
| polybutylene adipate: | | | | |
| molecular weight 1046 (moles) | — | — | — | 0,33 |
| molecular weight 1936 (moles) | — | — | — | 0,67 |
| polycaprolactone: | | | | |
| molecular weight 960 (moles) | 0,03 | 0,35 | 0,35 | — |
| molecular weight 1861 (moles) | 0,97 | 0,65 | 0,65 | — |
| trimethylol propane (moles) | — | — | 0,25 | — |
| polybutylene terephthalate (moles) | 1,00 | 0,818 | 1,125 | 0,819 |
| NCO/OH-ratio prepolymer | 2,0 | 2,0 | 2,0 | 1,9 |
| NCO/OH-ratio elastomer | 1,0 | 1,1 | 1,1 | 1,04 |
| relative viscosity $\eta$ rel | 2,03 | 2,03 | — | 1,95 |
| Hardness (Shore D) | 46 | 47 | 55 | 46 |
| $S_{100}(MN/m^2)$ | 12 | 12 | 15 | 11 |
| BS $(MN/m^2)$ | 28 | 32 | 36 | 32 |
| BR (%) | 690 | 650 | 530 | 620 |
| Compression set (%) | 31 | 31 | 32 | 33 |
| tear resistance (kN/m) | 132 | 137 | 151 | 137 |

Example VI

In this example it is shown that when use is made of a diisocyanate having a relatively high vapour pressure, such as diphenylmethane-4,4'-diisocyanate (MDI), the process according to the invention can be carried out in one and the same reactor.

The polybutylene terephthalate used had a molecular weight of 2500 and was deactivated by heating for 30 minutes with 3500 ppm diethylcarbethoxymethyl phosphonate at 240°C.

Subsequently, there were added, with vigorous stirring and over a period of 20 minutes, 2,24 moles MDI per mole of polybutylene terephthalate, with the temperature being kept at 240°C.

Into the same reactor there were introduced 1,04 moles of polybutylene adipate (molecular weight 1750) per mole of polybutylene terephthalate, which was mixed with the contents of the reactor for 30 minutes at a temperature between 220° and 240°C. The resulting high-viscous product was cooled and was found to have the properties mentioned in the following table.

TABLE VI

| | |
|---|---|
| relative viscosity $\eta_{rel}$ | 2,2 |
| Tg (°C) | –38/–20 |
| Ts (°C) | 150—234 |
| $Ts_{(p)}$ (°C) | 213 |
| Hardness (Shore D) | 50 |
| $S_{100}$ $(MN/m^2)$ | 15 |
| BS $(MN/m^2)$ | 35 |
| BR (%) | 530 |
| Tension set (%) | 28 |

Example VII

In this example it is shown that a polybutylene terephthalate prepared in the presence of tetrabutyl titanate as catalyst can be excellently deactived by a great many phosphorus compounds of which it is known that they also may be used as stabilizer in the preparation of polyester.

The polybutylene terephthalate had a molecular weight of 300 and was polymerized in the presence of 425 ppm tetrabutyl titanate.

Deactivation with the particular phosphorus compound was effected by heating for 30 or 240 minutes at 240°C. After deactivation 0,0123 moles of polybutylene terephthalate were mixed with 0,0148 moles of polybutylene adipate having a molecular weight of 1840 and heated for 30 minutes at 240°C. Next, Tg, Ts and $Ts_{(p)}$ were measured. The results listed in the following table clearly show that various phosphorus compounds qualify for being used in the process according to the present invention.

TABLE VII

| deactivator | reaction time * at 240°C (min) | Tg (°C) | Ts (°C) | $Ts_{(p)}$ (°C) |
|---|---|---|---|---|
| none (control) | 30 | −42/−22 | 105/167 | 148 |
| none (control) | 240 | −38/−25 | 95/164 | 145 |
| diethyl carbethoxy-methyl phosphonate | 30 | −55/−38 | 125/207 | 193 |
| triphenyl phosphate | 30 | −55/−40 | 123/212 | 204 |
| tributyl phosphate | 30 | −43/−23 | 93/172 | 143 |
| tributyl phosphate | 240 | −53/−40 | 82/218 | 213 |
| triphenyl phosphite | 30 | −53/−38 | 80/207 | 190 |
| triphenyl phosphine | 30 | −42/−25 | 79/168 | 148 |
| triphenyl phosphine | 240 | −40/−24 | 100/182 | 152 |

* reaction time between PBTP and deactivator.

This table shows with the exception of triphenyl phosphine the phosphorus compounds mentioned in it prevent transesterification.

In the case of tributyl phosphate a heating time of 30 minutes at 240°C does not suffice to deactivate tetrabutyl titanate.

Example VIII

In this example it is shown that a polybutylene terephthalate prepared in the presence of zinc acetate as catalyst can be deactivated by treating for 30 minutes at 240°C.

After deactivation 0,0123 moles of polybutylene terephthalate were mixed with 0,0148 moles of polybutylene adipate having a molecular weight of 1840 and heated for 30 minutes at 240°C.

The results of the measured Tg, Ts and Ts(p) clearly show the advantage of using the above deactivation method.

Tg (°C)=−60/−37
Ts (°C)=125/215
Ts(p) (°C)=208.

**Claims**

1. A process for the preparation of a segmented thermoplastic elastomer, by conversion in a melt system of

a. one or more —OH and/or —COOH groups-containing bifunctional polyesters or polyester amides having a melting point not higher than 100°C and a molecular weight in the range of 500 to 5000, and

b. one or more —OH and/or —COOH groups-containing bifunctional polyesters or polyester amides having a melting point not lower than 180°C and a molecular weight in the range of 500 to 5000 in the presence of such an amount of diisocyanate that the ratio between the number of —NCO groups and functional groups of both the low-melting and the high-melting compounds is at least 1,0 and at most 1,5, characterized in that the transesterification catalyst present in one segment or in both is deactivated prior to the conversion process.

2. A process according to claim 1, characterized in that the deactivation is effected by incorporation into one or both polyesters and/or polyester amides of a complexing phosphorus compound.

3. A process according to claim 2, characterized in that the amount of phosphorus compound used for the deactivation corresponds to at least 0,5 phosphorus atoms per metal atom of the transesterification catalyst.

4. A process according to claim 2, characterized in that the phosphorus compound used for the deactivation is employed in an amount of 3 to 15 phosphorus atoms per metal atom of the transesterification catalyst.

5. A process according to one or more of the preceding claims, characterized in that as phosphorus compound there is used diethylcarbethoxymethyl phosphonate.

6. A process according to one or more of the claims 2—5, characterized in that the phosphorus compound is introduced into the high-melting polyester or the high-melting polyesteramide prior to the conversion process and the mixture is kept in the molten state for at least 5 minutes.

7. A process according to claim 6, characterized in that the high-melting polyester or the high-melting polyester amide and the phosphorus compound introduced into it are in the molten phase for a period in the range of 30 to 60 minutes.

8. A process according to one or more of the preceding claims, characterized in that first a prepolymer is prepared by reacting the low-melting polyester or the low-melting polyester amide with the calculated amount of diisocyanate and the resulting prepolymer is reacted with the high-melting polyester or polyester amide which is in the molten phase.

9. A process according to one or more of the preceding claims, characterized in that the reaction mixture is formed by 10 to 90 parts by weight of high-melting polyester or polyester amide b and 90 to 10 parts by weight of low-melting polyester or polyester amide a per 100 parts by weight of a+b.

10. A process according to claim 9, characterized in that the reaction mixture consists of 40 to 80 parts by weight of polyester or polyester amide b, 60 to 10 parts by weight of polyester or polyester amide a and 2 to 15 parts by weight of a diisocyanate c per 100 parts by weight of a+b+c.

11. A process according to one or more of claims 8 to 10, characterized in that the high-melting component has a melting point of at least 210°C and the low-melting component has a melting point not higher than 60°C, and the temperature at which the prepolymer is reacted with the high-melting component is between at least 10°C above the melting point of the high-melting component and 290°C.

12. A process according to one or more of the preceding claims, characterized in that the high-melting (co)polyesters or (co)polyester amides are built up of units derived from one or more dicarboxylic acids having a molecular weight not higher than 300, at least 70 mole % of which consists of terephthalic acid, and of units derived from one or more low-molecular diols having a molecular weight not higher than 250, at least 70 mole % of which consists of 1,4-butane diol, and the sum of the percentages of the dicarboxylic acid which is not terephthalic acid and of the diol which is not 1,4-butane diol is not higher than 30.

13. A process according to claim 12, characterized in that the high-melting polyesters or polyester amides are built up of units derived from terephthalic acid and 1,4-butane diol.

14. A process according to one or more of the preceding claims characterized in that into one or both polyesters and/or polyester amides there is incorporated a compound having a higher functionality.

15. A process according to claim 14, characterized in that as compound having a higher functionality there is used trimethylol ethane, trimethylol propane and/or hexane triol.

16. A process according to one or more of the preceding claims, characterized in that the low-melting polyester is a substantially linear polyester having a molecular weight in the range of 800 to 2500.

17. A process according to one or more of the preceding claims, characterized in that the low-melting polyester is polybutylene adipate.

18. A process according to one or more of the claims 1—16, characterized in that the low-melting polyester is polycaprolactone.

**Patentansprüche**

1. Verfahren zur Herstellung segmentierter thermoplastischer Elastomerer durch Umwandlung

(a) eines oder mehrerer —OH und/oder —COOH-Gruppen enthaltender bifunktioneller Polyester oder Polyesteramide mit einem Schemlzpunkt nicht höher als 100°C und einem Molekulargewicht im Bereich von 500 bis 5000 und
(b) eines oder mehrerer —OH und/oder —COOH-Gruppen enthaltender bifunktioneller Polyester oder Polyesteramide mit einem Schemlzpunkt nicht niedriger als 180°C und einem Molekulargewicht im Bereich von 500 bis 5000 in einem geschmolzenen System in Gegenwart einer solchen Menge eines Diisocyanats, daß das Verhältnis zwischen der Anzahl der —NCO-Gruppen und der funktionellen Gruppen sowohl der niedrigschmelzenden als auch der hochschmelzenden Verbindung mindestens 1,0 und höchstens 1,5 ist, dadurch gekennzeichnet, daß der in einem oder in beiden Segmenten vorliegende Umesterungskatalysator vor dem Umwandlungsverfahren inaktiviert wird.

2. Verfahren nach Anspruch 1, dadurch gekennzeichnet, daß die Inaktivierung durch Einarbeiten einer komplexierenden Phosphorverbindung in eine oder beide Polyester und/oder Polyesteramide bewirkt wird.

3. Verfahren nach Anspruch 2, dadurch gekennzeichnet, daß die Menge der für die Inaktivierung verwendeten Phosphorverbindung mindestens 0,5 Phosphoratome je Metallatom des Umesterungskatalysators entspricht.

4. Verfahren nach Anspruch 2, dadurch gekennzeichnet, daß die für die Inaktivierung verwendete Phosphorverbindung in einer Menge von 3 bis 15 Phosphoratome je Metall des Umesterungskatalysators angewendet wird.

5. Verfahren nach einem oder mehrerer der vorstehenden Ansprüche, dadurch gekennzeichnet, daß als Phosphorverbindung Diäthyl-carbäthoxymethyl-phosphonat verwendet wird.

6. Verfahren nach einem oder mehreren der vorstehenden Ansprüche 2 bis 5, dadurch gekennzeichnet, daß die Phosphorverbindung vor dem Umwandlungsverfahren in den hochschmelzenden Polyester oder das hochschmelzende Polyesteramid eingearbeitet und das Gemisch für mindestens 5 Minuten im geschmolzenen Zustand gehalten wird.

7. Verfahren nach Anspruch 6, dadurch gekennzeichnet, daß der hochschmelzende Polyester oder das hochschmelzende Polyesteramid und die Phosphorverbindung für eine Dauer im Bereich von 30 bis 60 Minuten in die geschmolzene Phase eingearbeitet werden.

8. Verfahren nach einem oder mehreren der vorstehenden Ansprüche, dadurch gekennzeichnet, daß zuerst ein Prepolymer durch Umsetzen des niedrigschmelzenden Polyesters oder des niedrigschmelzenden Polyesteramids mit einer berechneten Menge Diisocyanat hergestellt und das erhaltene Prepolymer mit dem hochschmelzenden Polyester oder Polyesteramide, das in der geschmolzenen Phase ist, umgesetzt wird.

9. Verfahren nach einem oder mehreren der vorstehenden Ansprüche, dadurch gekennzeichnet, daß das Reaktionsgemisch durch 10 bis 90 Gewichtsteile von hochschmelzenden Polyester oder Polyesteramid (b) und 90 bis 10 Gewichtsteile von niedrigschmelzendem Polyester oder Polyesteramid (a) je 100 Gewichtsteile von (a)+(b) gebildet wird.

10. Verfahren nach Anspruch 9, dadurch gekennzeichnet, daß das Reaktionsgemisch aus 40 bis 80 Gewichtsteilen Polyester oder Polyesteramid (b), 60 bis 10 Gewichtsteilen Polyester oder Polyesteramid (a) und 2 bis 15 Gewichtsteilen eines Diisocyanats (c) je 100 Gewichtsteile von (a)+(b)+(c) besteht.

11. Verfahren nach einem oder mehreren der Ansprüche 8 bis 10, dadurch gekennzeichnet, daß die hochschmelzend Komponente einen Schmelzpunkt von mindestens 210°C und die niedrigschmelzende Komponente einen Schmelzpunkt nicht höher als 60°C hat und die Temperatur, bei der das Prepolymer mit der hochschmelzenden Komponente umgesetzt wird, zwischen mindestens 10°C oberhalb des Schmelzpunkts der hochschmelzenden Komponente und 290°C beträgt.

12. Verfahren nach einem oder mehreren der vorstehenden Ansprüche, dadurch gekennzeichnet, daß die hochschmelzenden (Co-)-Polyester oder (Co)-Polyesteramide von Einheiten, die sich von einer oder mehreren Dicarbonsäuren mit einem Molekulargewicht nicht höher als 300 ableiten—mindestens 70 Molprozent davon bestehen aus Terephthalsäure-, und von Einheiten, die sich von einem oder mehreren niedermolekularen Diolen mit einem Molekulargewicht nicht höher als 250 ableiten—mindestens 70 Molprozent davon bestehen aus 1,4-Butandiol-, aufgebaut sind und die Summe der Prozentsätze an Dicarbonsäure, die keine Terephthalsäure ist, und an Diol, das kein 1,4-Butandiol ist, nicht höher als 30 ist.

13. Verfahren nach Anspruch 12, dadurch gekennzeichnet, daß die hochschmelzenden Polyester oder Polyamide von Einheiten aufgebaut sind, die sich von Terephthalsäure und 1,4-Butandiol ableiten.

14. Verfahren nach einem oder mehreren der vorstehenden Ansprüche, dadurch gekennzeichnet, daß in einen oder in beide Polyester und/oder Polyamide eine Verbindung mit einer höheren Funktionalität eingearbeitet wird.

15. Verfahren nach Anspruch 14, dadurch gekennzeichnet, daß als Verbindung mit einer höheren Funktionalität Trimethyloläthan, Trimethylolpropan und/oder Hexantriol verwendet wird.

16. Verfahren nach einem oder mehreren der vorstehenden Ansprüche, dadurch gekennzeichnet, daß die niedrigschmelzende Polyester ein im wesentlichen linearer Polyester mit einem Molekulargewicht im Bereich von 800 bis 2500 ist.

17. Verfahren nach einem oder mehreren der vorstehenden Ansprüche, dadurch gekennzeichnet, daß der niedrigschmelzende Polyester Polybutylenadipat ist.

18. Verfahren nach einem oder mehreren der vorstehenden Ansprüche 1 bis 16, dadurch gekennzeichnet, daß der niedrigschmelzende Polyester Polycaprolacton ist.

**Revendications**

1. Un procédé pour la préparation d'un élastomère segmenté thermoplastique, par transformation dans un système à l'état fondu de

a) un ou plusieurs polyesters ou polyester amides bifonctionnels contenant des groupes —OH et/ou —COOH ayant un point de fusion par plus élevé que 100°C et un poids moléculaire compris entre 500 et 5000 et

b) un ou plusieurs polyesters ou polyester amides bifonctionnels contenant des groupes —OH et/ou —COOH ayant un point de fusion pas plus bas que 180°C et un poids moléculaire compris entre 500 et 5000 en présence d'une quantité de diisocyanate telle que le rapport entre le nombre de groupes —NCO et le nombre de groupes fonctionnels des deux composés à bas et à haut point de fusion soit d'au moins 1,0 et au maximum 1,5, caractérisé en ce que le catalyseur de transestérification présent dans un segment ou dans les deux est désactivé avent l'opération de conversion.

2. Un procédé selon la revendication 1, caractérisé en ce que la désactivation est effectuée par incorporation dans un ou dans les deux polyesters et/ou polyester amides d'un composé du phosphore complexant.

3. Un procédé selon la revendication 2, caractérisé en ce que la quantité de composé du phosphore utilisée pour la désactivation correspond à au moins 0,5 atome de phosphore par atome de métal du catalyseur de transestérification.

4. Un procédé selon la revendication 2, caractérisé en ce que le composé du phosphore utilisé pour la désactivation est utilisé à raison de 3 à 15 atomes de phosphore par atome de métal du catalyseur de trans-estérification.

5. Un procédé selon une ou plusieurs des revendications précédentes, caractérisé en ce que comme composé du phosphore on utilise du diéthyl-carbéthoxyméthyl phosphonate.

6. Un procédé selon une ou plusieurs des revendications 2 à 5, caractérisé en ce que le composé du phosphore est introduit dans le polyester d'un point du fusion élevé ou le polyester amide d'un point de fusion élevé avant l'opération de conversion et le mélange est maintenu dans l'état fondu pendant au moins 5 minutes.

7. Un procédé selon la revendication 6, caractérisé en ce que le polyester d'un point de fusion élevé ou le polyester amide d'un point de fusion élevé et le composé du phosphore qui y a été introduit sont maintenus dans la phase fondue pendant une période comprise entre 30 et 60 minutes.

8. Un procédé selon une ou plusieurs des revendications précédentes, caractérisé en ce que d'abord on prépare un prépolymère en faisant réagir le polyester d'un bas point de fusion ou le polyester amide d'un bas point de fusion avec la quantité calculée de diisocyanate et on fait réagir le prépolymère résultant avec le polyester ou polyester amide d'un point de fusion élevé qui se trouve dans la phase fondue.

9. Un procédé selon une ou plusieurs des revendications précédentes, caractérisé en ce que le mélange réactionnel est formé par 10 à 90 parties en poids de polyester ou polyester amide d'un point de fusion élevé b et 90 à 10 parties en poids de polyester ou polyester amide de bas point de fusion a, pour 100 parties en poids de a+b.

10. Un procédé selon la revendication 9, caractérisé en ce que le mélange réactionnel est constitué de 40 à 80 parties de polyester ou polyester amide b, 60 à 10 parties en poids de polyester ou polyester amide a et 2 à 15 parties en poids d'un diisocyanate c pour 100 parties en poids de a+b+c.

11. Un procédé selon une ou plusieurs des revendications 8 à 10, caractérisé en ce que le constituant d'un point de fusion élevé a un point de fusion d'au moins 210°C et le constituant d'un bas point de fusion a un point de fusion pas plus élevé que de 60°C, et la température à laquelle on fait réagir le prépolymère avec le constituant d'un point de fusion élevé est comprise entre au moins 10°C au-dessus du point de fusion du constituant d'un point de fusion élevé et 290°C.

12. Un procédé selon une ou plusieurs des revendications précédentes, caractérisé en ce que les (co)polyesters ou (co)polyester amides d'un point de fusion élevé sont constitués de mailles dérivées d'un ou plusieurs acides dicarboxyliques ayant un poids moléculaire pas supérieur à 300, dont une proportion d'au moins 70 moles % consiste en acide téréphtalique, et de mailles dérivées d'un ou plusieurs diols de poids moléculaire peu élevé ayant un poids moléculaire pas supérieur à 250, dont une proportion d'au moins 70% consiste en 1,4-butanediol, et la somme des pourcentages de l'acide dicarboxylique qui n'est pas de l'acide téréphtalique et du diol qui n'est pas du 1,4-butanediol n'est pas supérieure à 30.

13. Un procédé selon la revendication 12, caractérisé en ce que les polyesters ou polyester amides d'un point de fusion élevé sont constitués de mailles dérivées d'acide téréphtalique et de 1,4-butanediol.

14. Un procédé selon une ou plusieurs des revendications précédentes, caractérisé en ce que dans un ou dans les deux polyesters et/ou polyester amides, est incorporé un composé ayant une plus haute fonctionnalité.

15. Un procédé selon la revendication 14, caractérisé en ce que comme composé ayant une plus haute fonctionnalité on utilise du triméthyloléthane, du triméthylolpropane et/ou de l'hexanetriol.

16. Un procédé selon une ou plusieurs des revendications précédentes, caractérisé en ce que le polyester d'un bas point de fusion est un polyester sensiblement linéaire ayant un poids moléculaire compris entre 800 et 2500.

17. Un procédé selon une ou plusieurs des revendications précédentes, caractérisé en ce que le polyester d'un bas point de fusion est du polybutylène adipate.

18. Un procédé selon une ou plusieurs des revendications 1 à 6, caractérisé en ce que le polyester d'un bas point de fusion est de la polycaprolactone.